# DEMANDE DE BREVET EUROPEEN

(11) **EP 0 762 525 A1**
(43) Date de publication de la demande: **12.03.1997**
(21) Numéro de dépôt: 96401871.7
(22) Date de dépôt: 02.09.1996
(51) Int. Cl.: H01M 4/62, H01M 4/04

(54) **Anode de générateur électrochimique rechargeable au lithium et son procédé de fabrication**

(30) Priorité: 05.09.1995 FR 9510389
(71) Demandeur: SAFT, F-93230 Romainville (FR)
(72) Inventeur: Simon, Bernard, 92130 Issy les Moulineaux (FR); Boeuve, Jean-Pierre, 91460 Marcoussis (FR)
(74) Mandataire: Laroche, Danièle

(57) **Abrégé**

La présente invention a pour objet une anode pour générateur électrochimique rechargeable au lithium comprenant un support conducteur et une pâte contenant une matière électrochimiquement active susceptible d'insérer du lithium et un liant polymère, caractérisé par le fait que ledit liant est choisi parmi le polybutyral de vinyle, ses copolymères et ses mélanges avec des polymères non fluorés et non chlorés.

## Description

La présente invention concerne une anode destinée à être utilisée dans un générateur électrochimique rechargeable au lithium qui comporte un électrolyte organique. Elle s'étend en outre au procédé de fabrication de cette anode.

Aujourd'hui la plupart des électrodes de générateur électrochimique sont composées d'un support sur lequel est déposée une pâte contenant la matière active et un liant polymère. Le liant a pour fonction d'assurer la cohésion des grains de matière active entre eux et sur le support de l'électrode avant l'assemblage du générateur électrochimique et durant son fonctionnement.

Une électrode de forte puissance doit avoir une surface électrochimiquement active la plus élevée possible. Les matières actives mises en jeu dans une électrode de générateur électrochimique ont une surface inférieure à 50m²/g, et le plus souvent de l'ordre de 10m²/g. Or la surface électrochimiquement active accessible à l'électrolyte dépend de la manière dont les grains de matière active sont enrobés et liés par le polymère. Il est donc indispensable de minimiser la perte inévitable de capacité qui résulte de l'élaboration de l'électrode. On s'efforce d'introduire dans l'électrode la plus petite quantité possible de liant nécessaire mais suffisante pour assurer cette cohésion. En outre si l'électrode est insuffisamment mouillée par l'électrolyte, sa surface active sera diminuée. Ce qui provoque une augmentation de la densité de courant local et une plus faible capacité chargée. La mouillabilité de l'électrode dépend de la nature du liant utilisé.

Dans les générateurs rechargeables au lithium les plus récents, l'anode comporte un matériau constituant une structure d'accueil dans laquelle le lithium s'insère puis se désinsère au cours du cyclage. Il se produit au cours du cyclage des variations dimensionnelles de l'électrode que le liant doit pouvoir accompagner afin d'éviter sa désagrégation. En fin de charge, l'anode est portée à un potentiel proche de celui du lithium (inférieur à 0,5V/Li). Dans cette zone de potentiel très réducteur dans laquelle l'électrolyte est instable, l'anode est passivée par le produit de la réduction de l'électrolyte. En décharge le potentiel de l'anode peut atteindre des valeurs élevées, dépassant 2V/Li. Le liant doit posséder une réactivité la plus faible possible, aussi bien vis à vis de la réduction que de l'oxydation, pour être capable de supporter sans dégradation ces conditions extrêmes de fonctionnement.

Dans les générateurs électrochimiques, on emploie couramment un polymère en suspension aqueuse pour la fabrication d'électrode comme le polytétrafluoroéthylène (PTFE). Mais la texture particulière de l'électrode comportant une grille métallique supportant des grains de matière active liés par des fibrilles de PTFE, rend difficile la réalisation d'électrode minces destinées aux générateurs de forte puissance volumique. De plus les propriétés anti-adhérentes du PTFE ne permettent pas l'utilisation de support mince tel qu'un feuillard.

Plus récemment s'est imposé un mode de préparation des électrodes consistant à mettre le polymère en solution dans un solvant organique volatil. Les polymères retenus jusqu'ici pour cette application sont principalement le polyfluorure de vinylidène (PVDF), le polychlorure de vinyle (PVC), le terpolymère d'éthylène-propylène-diène à chaîne principale méthylène (EPDM), les élastomères (SBS, ...) et les liants cellulosiques.

La pâte comprenant la matière active et la solution de polymère est enduite sur un feuillard métallique de faible épaisseur, ce qui conduit à des électrodes denses et minces. Une étape de réticulation peut s'avérer nécessaire pour assurer l'insolubilité du polymère dans l'électrolyte organique. Ce procédé présente des inconvénients en raison de la toxicité des solvants employés et des problèmes de coût et de sécurité liés au recyclage d'un grand volume de solvant. De plus ces polymères n'offrent pas une bonne adhésion au feuillard métallique.

En outre les polymères contenant du fluor, comme le PVDF, ou du chlore, comme le PVC, sont instables aux potentiels très réducteurs atteints pendant la charge des générateurs électrochimiques au lithium.

L'attention s'est donc tournée vers des polymères susceptibles d'être mis en solution aqueuse, tels que la polyvinylpyrrolidone PVP, l'oxyde de polyéthylène PEO et le polyéthylèneimine. Mais la solubilité de ces polymères dans l'électrolyte organique est importante.

La présente invention concerne une anode de générateur électrochimique rechargeable au lithium, à performances élevées et de fabrication aisée, dont le liant est adapté au fonctionnement en milieu non aqueux dans un large domaine de tension.

L'objet de la présente invention est une anode pour générateur électrochimique rechargeable au lithium comprenant un support conducteur et une pâte contenant une matière électrochimiquement active susceptible d'insérer du lithium et un liant polymère, caractérisé par le fait que ledit liant est choisi parmi le polybutyral de vinyle (PVB), ses copolymères et ses mélanges avec des polymères non fluorés et non chlorés.

L'anode se présente sous la forme d'une couche souple et cohérente, contenant la matière active et le liant, adhérant à un support collecteur de courant. Ces polymères possèdent les qualités d'un liant classique; ils ont en outre l'avantage d'adhérer fortement aux surfaces métalliques et d'être solubles en milieu aqueux ou hydroalcoolique. Leur principal intérêt est d'être compatibles avec les conditions sévères de fonctionnement d'un générateur au lithium car leur réactivité vis à vis du lithium est modérée. Ils permettent la conservation dans la durée des performances de l'anode en supportant sans modification d'être soumis à l'alternance d'un potentiel fortement réducteur puis oxydant.

Selon une forme d'exécution préférentielle, ledit liant est un copolymère de polybutyral de vinyle (PVB) et d'alcool de polyvinyle (PVA) de formule (-CH₂-CHOH-)ₙ, dans lequel le taux d'alcool de polyvinyle est compris entre 5% et 30% en poids. Le PVB est fabriqué à partir du PVA par action de l'aldéhyde butyrique. Il est donc difficile d'obtenir le PVB seul. La présence du PVA à un taux inférieur à 30% facilite la mise en solution hydroalcoolique du PVB, tout en conservant une bonne inertie chimique vis à vis de l'électrolyte.

La proportion dudit liant est comprise entre 1% et 50% en poids de ladite pâte, plutôt entre 1% et 20% en poids, et de préférence entre 5% et 20% en poids de ladite pâte. Une telle teneur confère à l'électrode une cohésion et une adhérence au support qui se conservent pendant toute sa durée de vie.

Selon un mode de réalisation de l'anode, ladite matière active est un matériau carboné choisi parmi le graphite, le coke, et le carbone vitreux. La matière active peut se présenter sous forme de grains ou de fibres.

La présente invention a également pour objet un procédé de fabrication de ladite anode composé des étapes suivantes:
- on met en solution ledit liant dans un solvant choisi parmi l'eau, un alcool, la N-méthylpyrolidone (NMP) et leurs mélanges,
- on réalise une pâte en ajoutant ladite matière active audit liant en solution,
- on dépose ladite pâte sur ledit support pour former ladite anode,
- on sèche ladite anode jusqu'à évaporation complète dudit solvant.

La pâte est réalisée à partir du mélange de la matière active en poudre et de la solution du polymère Le support utilisé est de préférence un feuillard métallique de faible épaisseur permettant d'obtenir des électrodes minces. La pâte y est déposée par enduction, étalement centrifuge (spin-coating) ou pulvérisation (spray-coating) selon sa viscosité. Une étape de séchage est nécessaire pour évaporer le solvant. L'électrode subit ensuite un ou plusieurs calandrages pour atteindre la porosité et l'épaisseur désirées.

Selon une variante de réalisation, on réalise une pâte en ajoutant ladite matière active et un agent réticulant audit liant en solution. De préférence, ledit agent réticulant est choisi parmi les isocyanates, les anhydrides d'acide, les polyamines, les dérivés de la mélamine, les époxydes et l'épichlorhydrine.

Selon une première forme d'exécution de l'invention, ledit liant est l'alcool de polyvinyle (PVA) et ledit solvant est choisi parmi l'eau et un mélange eau-alcool. Lorsqu'il est très hydrolysé, le PVA n'est soluble que dans l'eau, moins hydrolysé on peut le dissoudre dans une solution hydroalcoolique.

Selon une deuxième forme d'exécution de l'invention, ledit liant est le polybutyral de vinyle (PVB) et ledit solvant est l'alcool. Le PVB est insoluble dans l'eau mais soluble dans les alcools.

Selon une troisième forme d'exécution de l'invention, ledit liant est un copolymère de polybutyral de vinyle (PVB) et d'alcool de polyvinyle (PVA) et ledit solvant est un mélange eau- alcool.

Dans le cas où on souhaite utiliser un mélange PVA-PVB, celui-ci pourra facilement être mis en oeuvre dans un mélange eau-alcool.

L'anode selon l'invention a pour avantage la facilité de réalisation industrielle. En effet sa fabrication fait appel à des solvants volatils non toxiques dont l'utilisation est plus sûre que les solvants habituels et le recyclage rendu inutile. L'invention offre aux fabricants de ces générateurs une anode au lithium, de fabrication aisée et peu coûteuse, offrant des performances élevées pendant une longue durée de vie.

D'autres caractéristiques et avantages de la présente invention apparaîtront à la lecture des exemples suivants de réalisation, donnés bien entendu à titre illustratif mais nullement limitatif, en référence au dessin annexé.

Dans le dessin annexé:
- la figure 1 représente la courbe d'intercalation et de désintercalation de lithium dans une anode selon l'art antérieur d'un générateur électrochimique rechargeable,
- la figure 2 est analogue à la figure 1 pour une première variante d'une anode selon l'invention,
- la figure 3 est analogue à la figure 1 pour une deuxième variante d'une anode selon l'invention.

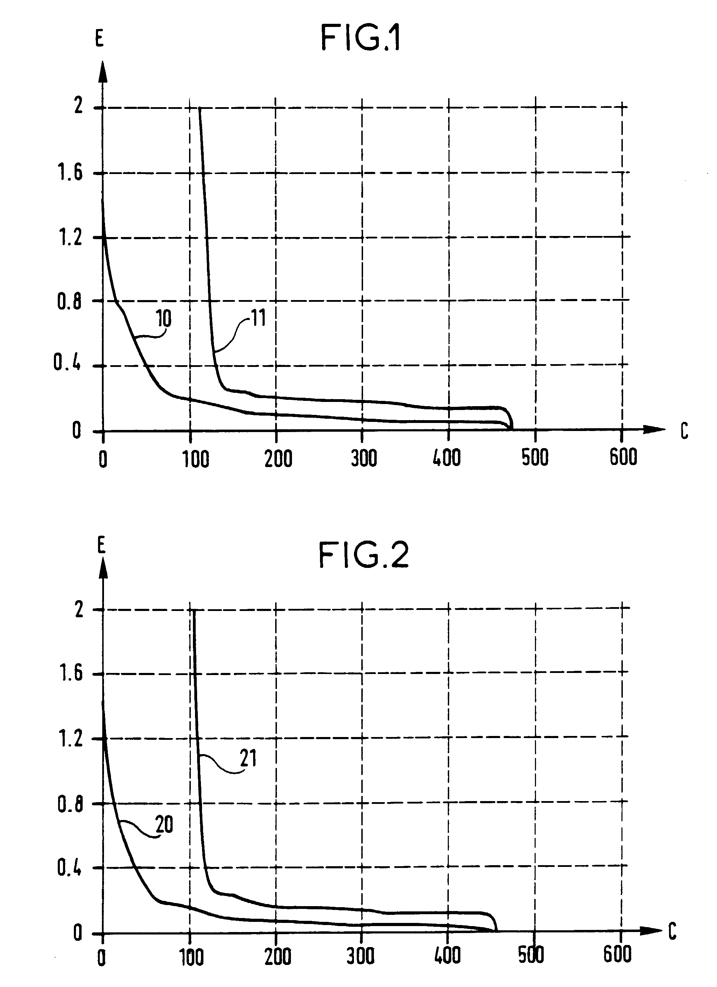

Sur les figures 1 à 3, le potentiel de l'anode E en volts par rapport au lithium est donné en ordonnée, et en abscisse est portée la capacité massique C de l'anode en mAh/g.

### EXEMPLE 1

On réalise une anode selon l'art antérieur à partir du mélange de 90% en poids de matériau carboné très cristallisé de type graphite naturel avec 10% de PVDF, qui est enduit sur une grille de nickel. L'anode est ensuite assemblée dans un générateur rechargeable de type bouton de format CR 2430 (diamètre 24mm, épaisseur 3mm) face à une cathode d'oxyde de cobalt.

La cathode d'oxyde lithié est dimensionnée pour être surcapacitive afin d'observer les phénomènes se produisant à l'anode. Entre les électrodes est placé un séparateur en polyéthylène microporeux, commercialisé sous la référence "CELGARD 2502" de la société CELANESE CORPORATION, et on ajoute un électrolyte comportant un mélange de solvants et un sel de lithium. Le mélange de solvants est composé d'une partie en poids de carbonate d'éthylène EC et d'une partie en poids de carbonate de diméthyle DMC. Le sel de lithium est le trifluorométhanesulfonimide de lithium LiTFSI (LiN(CF₃SO₂)₂) qui est ajouté à une concentration de 1M.

Le générateur est alors testé à température ambiante à un régime de 20mA/g de carbone, en charge jusqu'à une tension de 4 Volts (fin de l'intercalation du lithium à 0V/Li) et en décharge jusqu'à une tension 2 Volts (fin de la désinsertion du lithium à 2V/Li). La courbe 10 de la figure 1 représente la première intercalation de lithium dans une anode selon l'art antérieur, suivie d'une désinsertion que montre la courbe 11. La capacité massique restituée est de l'ordre de 350mAh/g.

### EXEMPLE 2

On réalise un générateur électrochimique rechargeable analogue à celui de l'exemple 1 à l'exception du fait qu'il contient une anode selon la présente invention préparée à partir du mélange de 90% en poids de matériau carboné très cristallisé de type graphite naturel avec 10% d'alcool de polyvinyle (PVA), qui est enduit sur une grille de nickel.

Le générateur est alors testé dans les mêmes conditions que dans l'exemple 1. La courbe 20 de la figure 2 représente la première intercalation de lithium dans une anode selon l'invention, suivie d'une désinsertion que montre la courbe 21. La capacité massique restituée est de l'ordre de 354mAh/g.

### EXEMPLE 3

On réalise un générateur électrochimique rechargeable analogue à celui de l'exemple 1 à l'exception du fait qu'il contient une anode selon la présente invention préparée à partir du mélange de 90% en poids de matériau carboné très cristallisé de type graphite naturel avec 10% d'un copolymère de polybutyral de vinyle (PVB) et d'alcool de polyvinyle (PVA) contenant 20% en poids de PVA, qui est enduit sur une grille de nickel.

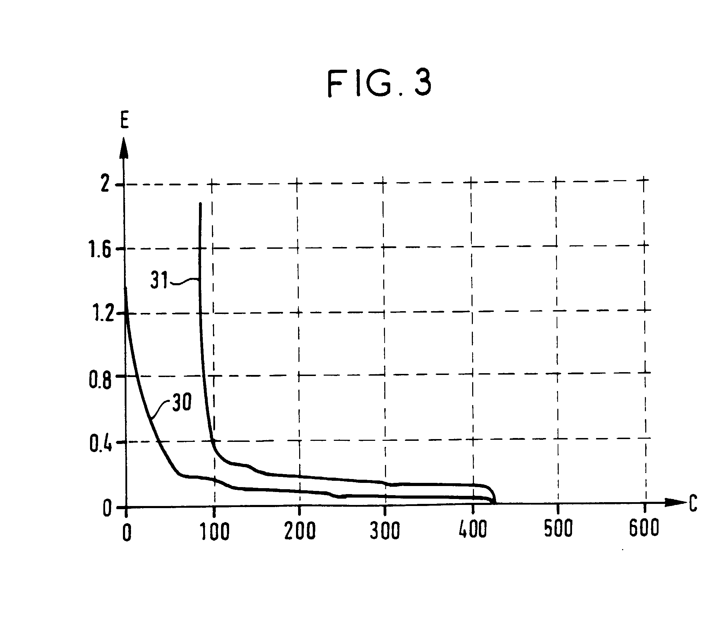

Le générateur est alors testé dans les mêmes conditions que dans l'exemple 1. La courbe 30 de la figure 3 représente la première intercalation de lithium dans une anode selon l'invention, suivie d'une désinsertion que montre la courbe 31. La capacité massique restituée est de l'ordre de 338mAh/g.

Bien entendu la présente invention n'est pas limitée aux modes de réalisation décrits, mais elle est susceptible de nombreuses variantes accessibles à l'homme de l'art sans que l'on ne s'écarte de l'esprit de l'invention.

## Revendications

1. Anode pour générateur électrochimique rechargeable au lithium comprenant un support conducteur et une pâte contenant une matière électrochimiquement active susceptible d'insérer du lithium et un liant polymère, caractérisé par le fait que ledit liant est choisi parmi le polybutyral de vinyle, ses copolymères et ses mélanges avec des polymères non fluorés et non chlorés.

2. Anode selon la revendication 1, dans laquelle ledit liant est un copolymère de polybutyral de vinyle et d'alcool de polyvinyle dans lequel le taux d'alcool de polyvinyle est compris entre 5% et 30% en poids.

3. Anode selon la revendication 1, dans laquelle la proportion dudit liant est comprise entre 1% et 50% en poids de ladite pâte.

4. Anode selon la revendication 3, comprenant une proportion dudit liant comprise entre 5% et 20% en poids.

5. Anode selon l'une des revendications précédentes, dans laquelle ladite matière active est un matériau carboné choisi parmi le graphite, le coke, et le carbone vitreux.

6. Procédé de fabrication d'une anode selon l'une des revendications précédentes, composé des étapes suivantes:
- on met en solution ledit liant dans un solvant choisi parmi l'eau, un alcool, la N-méthylpyrolidone et leurs mélanges,
- on réalise une pâte en ajoutant ladite matière active audit liant en solution,
- on dépose ladite pâte sur ledit support pour former ladite anode,
- on sèche ladite anode jusqu'à évaporation complète dudit solvant.

7. Procédé selon la revendication 6, dans lequel on réalise une pâte en ajoutant ladite matière active et un agent réticulant audit liant en solution.

8. Procédé selon la revendication 7, dans lequel ledit agent réticulant est choisi parmi les isocyanates, les anhydrides d'acide, les polyamines, les dérivés de la mélamine, les époxydes et l'épichlorhydrine.

9. Procédé selon l'une des revendications 6 et 7, dans lequel ledit liant est l'alcool de polyvinyle et ledit solvant est choisi parmi l'eau et un mélange eau-alcool.

10. Procédé selon l'une des revendications 6 et 7, dans lequel ledit liant est le polybutyral de vinyle et ledit solvant est un alcool.

11. Procédé selon l'une des revendications 6 et 7, dans lequel ledit liant est un copolymère de polybutyral de vinyle et d'alcool de polyvinyle et ledit solvant est un mélange eau- alcool.
